# EUROPEAN PATENT APPLICATION

(11) **EP 4 675 895 A1**
(43) Date of publication of application: **07.01.2026**
(21) Application number: 24763490.0
(22) Date of filing: 01.02.2024
(51) Int. Cl.: H02K 3/04, H02K 15/09

(54) **WOUND FIELD ROTOR AND METHOD FOR MANUFACTURING WOUND FIELD ROTOR**

(30) Priority: 27.02.2023 JP 2023028955
(71) Applicant: DENSO CORPORATION, Kariya-city, Aichi 448-8661 (JP)
(72) Inventor: SEGUCHI, Masahiro, Kariya-city, Aichi 448-8661 (JP)
(74) Representative: Kuhnen & Wacker Patent- und Rechtsanwaltsbüro PartG mbB
(86) International application number: PCT/JP2024/003299
(87) International publication number: WO 2024/181006

(57) **Abstract**

A wound field rotor (60) includes a rotor core (70) that includes a main pole portion (72), and a field winding (80) that is configured by a conductor wire (90) being wound in multiple layers around each main pole portion such that the conductor wire is arrayed in the radial direction and the circumferential direction. The field winding wound around the main pole portion includes a straight portion (81a, 82a, 101a, 102a) extending in an axial direction along a side surface in the radial direction of the main pole portion, and a crossover portion (101b, 102b) connecting end portions of the straight portions. A lateral cross-section of the straight portion has a rectangular shape in which a radial direction is a long side. The field winding is configured such that, of the straight portions arrayed in the circumferential direction and the radial direction in the main pole portion, a dimension in a short-side direction of the lateral cross-section of the straight portion on an inner side in the radial direction is smaller than the dimension in the short-side direction of the lateral cross-section of the straight portion on an outer side in the radial direction.

## Description

### FIELD ROTOR

### [Cross-Reference to Related Applications]

The present application is based on and claims the benefit of priority from Japanese Patent Application No. 2023-028955, filed on February 27, 2023, the description of which is incorporated herein by reference.

### [Technical Field]

The present disclosure relates to a wound field rotor and a method for manufacturing a wound field rotor.

### [Background Art]

As a wound field rotor of this type, a wound field rotor including a rotor core that includes a main pole portion provided for each magnetic pole arrayed in a circumferential direction and protruding in a radial direction, and a field winding that is configured by a conductor wire being wound in multiple layers around each main pole such that the conductive wire is arrayed in the radial direction and the circumferential direction is known.

### [Citation List]

### [Patent Literature]

[PTL 1] JP 2008-178211 A

### [Summary]

The field winding wound around each main pole portion includes a straight portion that extends in an axial direction along a side surface in the radial direction of the main pole portion and a crossover portion that connects ends portions of the straight portions to each other.

A distance between the main pole portions adjacent to each other in the circumferential direction decreases toward an inner side in the radial direction. Therefore, the straight portion on the inner side in the radial direction and an outermost layer in the circumferential direction of the field winding wound around one of the main pole portions adjacent to each other in the circumferential direction, and the straight portion on the inner side in the radial direction and the outermost layer in the circumferential direction of the field winding wound around the other main pole portion may interfere with each other. To prevent interference, reducing the number of turns may be considered. However, in this case, dead space between the main pole portions adjacent to each other in the circumferential direction increases, and decrease in space factor of the field winding becomes a concern.

The main object of the present disclosure is to provide a wound field rotor that is capable of increasing space factor of a field winding and a method for manufacturing a wound field rotor.

The present disclosure provides a wound field rotor that is applicable to a wound-field-type rotating electric machine, the wound field rotor including: a rotor core that includes a main pole portion that is provided for each magnetic pole arrayed in a circumferential direction and protrudes in a radial direction; and a field winding that is configured by a conductor wire being wound in multiple layers around each main pole portion such that the conductor wire is arrayed in the radial direction and the circumferential direction, in which: the field winding wound around the main pole portion includes a straight portion extending in an axial direction along a side surface in the radial direction of the main pole portion and a crossover portion connecting end portions of the straight portions.

In the present disclosure, a lateral cross-section of the straight portion has a rectangular shape in which a radial direction is a long side, and the field winding is configured such that, of the straight portions arrayed in the circumferential direction and the radial direction in the main pole portion, a dimension in a short-side direction of the lateral cross-section of the straight portion on an inner side in the radial direction is smaller than the dimension in the short-side direction of the lateral cross-section of the straight portion on an outer side in the radial direction.

As a result, the number of turns in the field winding on the inner side in the radial direction of the main pole portion can be increased while preventing interference between the straight portion on the inner side in the radial direction of the field winding wound around one of main pole portions adjacent to each other in the circumferential direction, and the straight portion on the inner side in the radial direction of the field winding round around the other main pole portion. As a result, dead space between the main pole portions adjacent to each other in the circumferential direction can be reduced and space factor of the field winding can be improved.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is an overall configuration diagram illustrating a control system for a rotating electric machine according to an embodiment;
Fig. 2 is a diagram illustrating an inverter and a surrounding configuration thereof;
Fig. 3 is a lateral cross-sectional view of a rotor;
Fig. 4 is a diagram illustrating a resonance circuit provided in the rotor;
Fig. 5 is a perspective view of a configuration of a coil body;
Fig. 6 is a flowchart illustrating a manufacturing process for the rotor;
Fig. 7 is a perspective view of a manner in which a conductor wire is wound around a basic die;
Fig. 8 is a perspective view of a manner in which the conductor wire is wound around the basic die;
Fig. 9 is a perspective view of a state in which winding of the conductor wire is completed;
Fig. 10 is a perspective view of a manner in which a side die moves;
Fig. 11 is a perspective view of a manner in which the side die, a main moveable die, and an auxiliary movable die move;
Fig. 12 is a cross-sectional view of a manner in which the conductor wire is compression-formed;
Fig. 13 is a cross-sectional view of a manner in which the conductor wire is compression-formed;
Fig. 14 is a cross-sectional view of a manner in which the conductor wire is compression-formed;
Fig. 15 is a cross-sectional view of a manner in which the conductor wire is compression-formed according to another embodiment;
Fig. 16 is a cross-sectional view of a manner in which the conductor wire is compression-formed according to another embodiment;
Fig. 17 is a cross-sectional view of a manner in which the conductor wire is compression-formed according to another embodiment;
Fig. 18 is a cross-sectional view of a manner in which the conductor wire is compression-formed according to another embodiment;
Fig. 19 is a perspective view of a manner in which the conductor wire is wound around the basic die according to another embodiment;
Fig. 20 is a cross-sectional view of a manner in which the conductor wire is compression-formed according to another embodiment;
Fig. 21 is a cross-sectional view of a manner in which the conductor wire is compression-formed according to another embodiment;
Fig. 22 is a perspective view of a configuration of the coil body according to another embodiment;
Fig. 23 is a perspective view of a configuration of the coil body according to another embodiment;
Fig. 24 is a lateral cross-sectional view of the rotor according to another embodiment;
Fig. 25 is a lateral cross-sectional view of the rotor according to another embodiment; and
Fig. 26 is a cross-sectional view of a manner in which the conductor wire is compression-formed according to another embodiment.

### [Description of Embodiments]

A plurality of embodiments will be described with reference to the drawings. According to the plurality of embodiments, functionally and/or structurally corresponding sections and/or associated sections may be given the same reference numbers or references numbers having differing digits in the hundreds place and higher. Descriptions according to other embodiments can be referenced for corresponding sections and/or associated sections.

An embodiment implementing a wound field rotor of the present disclosure will be described below with reference to the drawings.

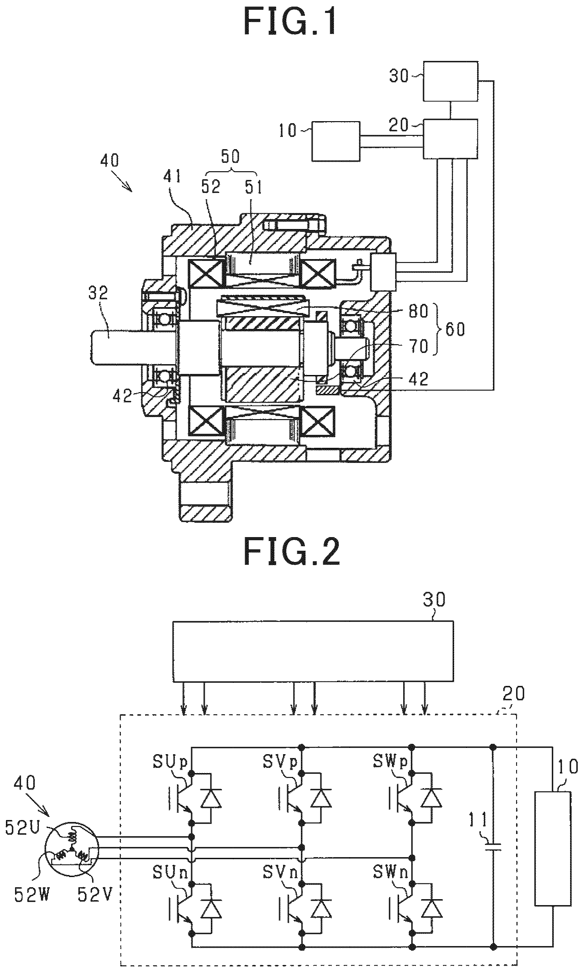

First, a control system including a rotating electric machine will be described with reference to Fig. 1. The control system includes a direct-current power supply 10, an inverter 20, a control unit 30, and a rotating electric machine 40. The rotating electric machine 40 is a field-winding-type synchronous motor. According to the present embodiment, the control unit 30 controls the rotating electric machine 40 to function as an integrated starter generator (ISG) that is both a motor and a generator, or a motor generator (MG). For example, an electromechanical integrated driving apparatus may be configured to include the rotating electric machine 40, the inverter 20, and the control unit 30. Alternatively, the rotating electric machine 40, the inverter 20, and the control unit 30 may each be composed of a separate component.

An overview of the rotating electric machine 40 will be described with reference to Fig. 1. The rotating electric machine 40 includes a housing 41, and a stator 50 and a rotor 60 housed inside the housing 41. The rotating electric machine 40 according to the present embodiment is an inner-rotor type in which the rotor 60 is disposed on an inner side of the stator 50 in a radial direction.

The stator 50 includes a stator core 51 and a stator winding 52 wound around the stator core 51. The stator core 51 is configured by laminated steel plates composed of a soft magnetic body, and includes an annular back yoke and a plurality of teeth protruding from the back yoke toward the radially inner side. For example, the stator winding 52 may be composed of a copper wire and includes U-, V-, and W-phase windings 52U, 52V, and 52W that are arranged such as to be shifted from each other by an electrical angle of 120°.

The rotor 60 includes a rotor core 70 and a field winding 80. The rotor core 70 is composed of a soft magnetic body. For example, the rotor core 70 may be configured by laminated steel plates. For example, the field winding 80 may be configured by compression-forming. Here, for example, the field winding 80 may be composed of aluminum wire or copper wire.

A rotating shaft 32 is inserted through a center hole of the rotor core 70. The rotating shaft 32 is rotatably supported by the housing 41 with a bearing 42 therebetween. Both the stator 50 and the rotor 60 are disposed coaxially with the rotating shaft 32. In the description below, a direction in which the rotating shaft 32 extends is an axial direction. A direction radially extending from the center of the rotating shaft 32 is a radial direction. A direction extending circumferentially around the rotating shaft 32 is a circumferential direction.

As shown in Fig. 2, the inverter 20 includes series-connection bodies composed of U-, V-, W-phase upper arm switches SUp, SVp, and SWp and U-, V-, W-phase lower arm switches SUn, SVn, and SWn. First ends of the U, V, W phase windings 52U, 52V, 52W are connected to connection points between the U-, V-, W-phase upper arm switches SUp, SVp, and SWp and the U-, V-, W-phase lower arm switches SUn, SVn, and SWn. Second ends of the U-, V-, W-phase windings 52U, 52V, 52W are connected at a neutral point. That is, according to the present embodiment, the U-, V-, W-phase windings 52U, 52V, and 52W are connected by a star connection. Here, according to the present embodiment, each of the switches SUp to SWn is an insulated-gate bipolar transistor (IGBT). A freewheeling diode is connected to each switch SUp, SVp, SWp, SUn, SVn, and SWn in antiparallel.

A positive terminal of the direct-current power supply 10 is connected to collectors of the U-, V-, W-phase upper arm switches SUp, SVp, SWp. A negative terminal of the direct-current power supply 10 is connected to emitters of the U-, V-, W-phase lower arm switches SUn, SVn, SWn. Here, a smoothing capacitor 11 is connected in parallel to the direct-current power supply 10.

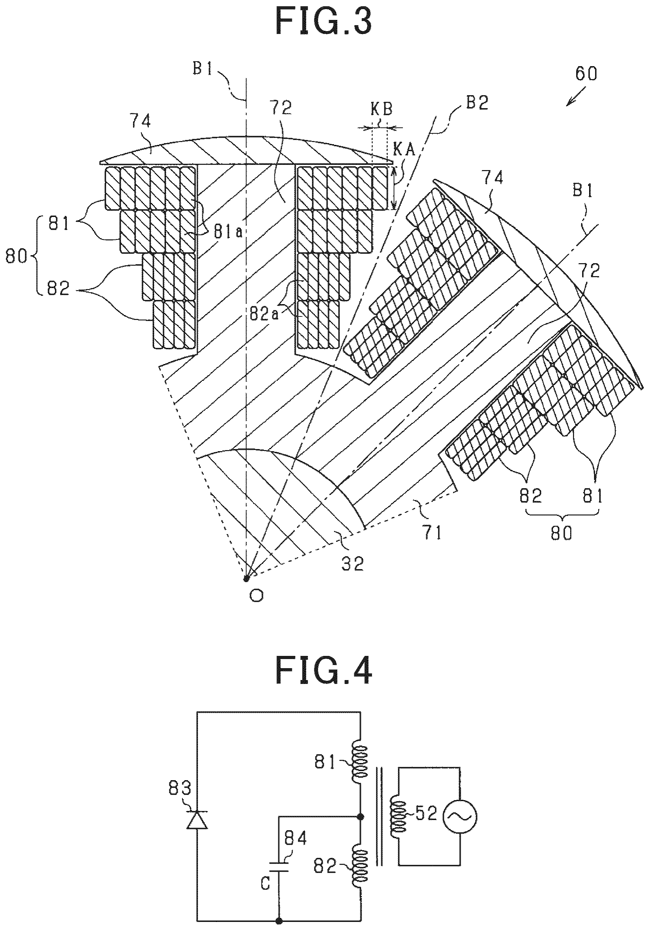

Next, the rotor 60 will be described with reference to Fig. 3

The rotor core 70 includes a circular cylindrical portion 71 that serves as a yoke portion having a circular cylindrical shape, a plurality of main pole portions 72 protruding from the cylindrical portion 71 toward an outer side in the radial direction and a flange portion 74 that extends to both sides in the radial direction from a tip end portion of the main pole portion 72. According to the present embodiment, the main pole portions 72 are arranged at equal intervals in the circumferential direction.

The field winding 80 includes a first winding portion 81 and a second winding portion 82. In each main pole portion 72, the first winding portion 81 is wound on the outer side in the radial direction, and the second winding portion 82 is wound further toward the inner side than the first winding portion 81 in the radial direction. In each main pole portion 72, winding directions of the first winding portion 81 and the second winding portion 82 are the same. In addition, of the main pole portions 72 adjacent to each other in the circumferential direction, the winding direction of the winding portions 81 and 82 wound around one main pole portion 72 and the winding direction of the winding portions 81 and 82 wound around the other main pole portion 72 are opposite. Therefore, magnetization directions are opposite between the main pole portions 72 adjacent to each other in the circumferential direction.

Fig. 4 shows an electrical circuit on the rotor 60 side including the winding portions 81 and 82 wound around the common main pole portion 72. The rotor 60 is provided with a diode 83 that serves as a rectifier element and a capacitor 84. A first end of the first winding portion 81 is connected to a cathode of the diode 83, and a first end of the second winding portion 82 is connected to a second end of the first winding portion 81. An anode of the diode 83 is connected to a second end of the second winding portion 82. The capacitor 84 is connected in parallel to the second winding portion 82. Here, the first end of the first winding portion 81 may be connected to the anode of the diode 83, and the second end of the second winding portion 82 may be connected to the cathode of the diode 83.

According to the present embodiment, a series resonance circuit composed of the first winding portion 81, the capacitor 84, and the diode 83 is configured, and a parallel resonance circuit composed of the second winding portion 82 and the capacitor 84 is configured.

Returning to the description of Fig. 2, the control unit 30 generates a drive signal for turning on and off each of the switches SUp to SWn composing the inverter 20. Specifically, the control unit 30 generates the drive signal for turning on and off each of the arm switches SUp to SWn to convert direct-current power outputted from the direct-current power supply 10 to alternating-current power and supply the alternating-current power to the U-, V-, W-phase windings 52U, 52V, and 52W, and supplies the generated drive signal to a gate of each of the arm switches SUp to SWn.

The control unit 30 turns the switches SUp to SWn on and off to send a combined current of a fundamental wave current and a harmonic current through the phase windings 52U, 52V, and 52W. The fundamental wave current is an electric current that mainly generates torque in the rotating electric machine 40. The harmonic current is an electric current that mainly excites the field winding 80 and sends a field current through the field winding 80. Phase currents flowing through the phase winding 52U, 52V, and 52W are shifted from each other by an electrical angle of 120°.

Here, some or all of the functions of the control unit 30 may be configured by hardware, such as by one or a plurality of integrated circuits. In addition, each function of the control unit 30 may be, for example, configured by software recorded on a non-transitory, tangible recording medium and a computer that runs the software.

Next, the field winding 80 will be described with reference to Fig. 3.

The conductor wire composing the field winding 80 is a flat wire in which a lateral cross-section has a rectangular shape (specifically, oblong). The field winding 80 is configured such that the conductor wire is wound flat-wise so as to be arrayed in the radial direction and the circumferential direction. The conductor wire is composed of a conductor portion and an insulating layer (such as an insulating film) covering the conductor portion.

The field winding 80 includes a straight portion extending along the axial direction on a side surface in the radial direction of the main pole portion 72, and a crossover portion connecting end portions of the straight portions and extending in the circumferential direction. In Fig. 3, 81a is the straight portion of the first winding portion 81, and 82a is the straight portion of the second winding portion 82.

In an example shown in Fig. 3, the straight portions 81a of the first winding portion 81 are arrayed in two rows in the radial direction. In the first winding portion 81, the straight portions 81a of a first layer closest to the stator 50 in the radial direction are arrayed six in a row in the circumferential direction. The straight portions 81a of a second layer are arrayed five in a row in the circumferential direction. The straight portions 82a of the second winding portion 82 are arranged in two rows in the radial direction. In the second winding portion 82, the straight portions 82a of a first layer closest to the stator 50 in the radial direction (that is, a third layer in the field winding 80) are arrayed five in a row in the circumferential direction. The straight portions 82a of a second layer (that is, a fourth layer in the field winding 80) are arrayed four in a row in the circumferential direction.

In the first and second winding portions 81 and 82, a dimension in a long-side direction in the lateral cross-section of the straight portions 81a and 82a is KA, a dimension in a short-side direction in the lateral cross-section of the straight portions 81a and 82a is KB, and an aspect ratio is KA/KB. According to the present embodiment, the first and second winding portions 81 and 82 are configured such that, in the straight portions 81a and 82a arrayed in the circumferential direction and the radial direction in each main pole portion 72, the aspect ratio of the straight portion 82a on the inner side in the radial direction is greater than the aspect ratio of the straight portion 81a on the outer side in the radial direction. This is a configuration for increasing space factor of the field winding 80.

Here, the aspect ratio of the straight portion 81a configuring the first winding portion 81 may be, for example, 1.8 to 10, 1.8 to 8, 1.9 to 6, or 2 to 5. In addition, the aspect ratio of the straight portion 82a configuring the second winding portion 82 may be, for example, 1.3 to 5 times, 1.5 to 5 times, 1.8 to 4 times, or 2 to 3 times the aspect ratio of the straight portion 81a configuring the first winding portion 81.

A center axis of the main pole portion 72 passing through a rotational center axis O of the rotating shaft 32 of the rotor 60 and extending in the radial direction is a first axis B1. In addition, an axis passing through a center position in the circumferential direction between the first axes B1 adjacent to each other in the circumferential direction and the rotational center axis O, and extending in the radial direction is a second axis B2. The first axis b1 corresponds to a d-axis, and the second axis B2 corresponds to a q-axis. In a manner of winding according to the present embodiment, the straight portion of the outermost layer in the circumferential direction of the field winding 80 can be brought close to the second axis B2. Therefore, a proportion of space occupied by the field winding 80 in a space between the main pole portions 72 adjacent to each other in the circumferential direction can be increased, and space factor of the field winding 80 in the rotor 60 can be increased. A resistance value of the field winding 80 can be reduced by using a flat wire having a large lateral cross-sectional area. Loss in the field winding 80 can be reduced, and excitability of the field winding 80 can be enhanced.

Here, in the example shown in Fig. 3, a gap is present between the field windings 80 adjacent to each other in the circumferential direction. However, the present invention is not limited to the configuration in which gaps are present. For example, a configuration in which outer end portions of the field windings 80 adjacent to each other in the circumferential direction are in contact with a sheet-like insulating member (such as insulating paper) provided along the second axis B2 is also possible.

The field winding 80 includes a plurality of coil bodies 100 formed by a flat wire being wound in multiple layers in the radial direction for each magnetic pole (for each main pole portion 72), and is configured by the coil bodies 100 of the magnetic poles being connected in series in the circumferential direction. In the configuration shown in Fig. 3, the first winding portion 81 of each main pole portion 72 is composed of one coil body 100, and the second winding portion 82 of each main pole portion 72 is composed of one coil body 100.

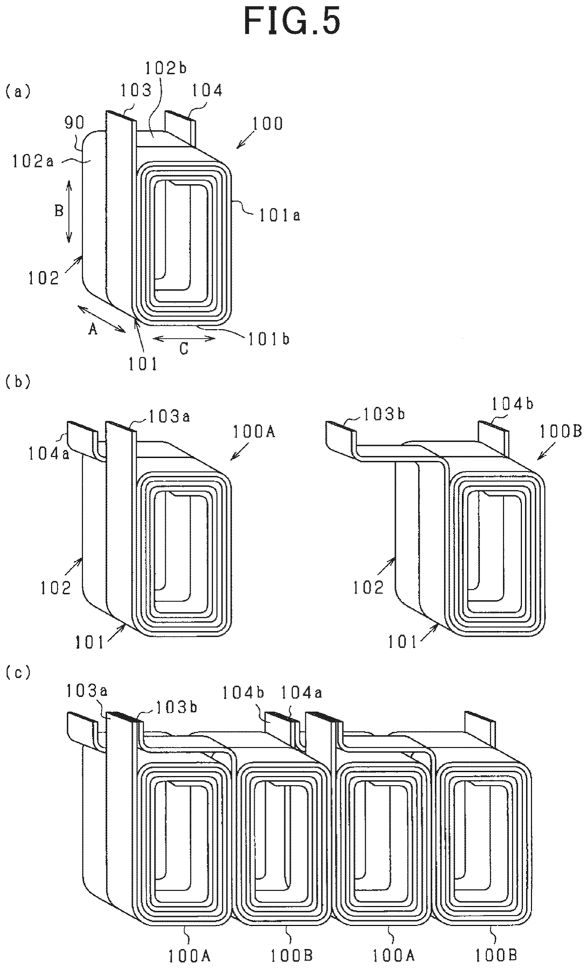

Fig. 5(a) is a perspective view of a basic configuration of the coil body 100. In Fig. 5(a), an A-direction is the radial direction, a B-direction is the axial direction, and a C-direction is the circumferential direction. Here, in the configuration in Fig. 5(a), the number of windings for each layer inside and outside in the radial direction is the same. However, as shown in Fig. 3, the number of windings inside and outside in the radial direction may differ.

The coil body 100 is an air-core coil configured as an α-wound coil, in which windings amounting to two layers arrayed in the radial direction are integrally formed. That is, the coil body 100 includes an inner coil portion 101 and an outer coil portion 102 that are respectively on the inner side in the radial direction (inner layer side) and the outer side in the radial direction (outer layer side) when attached to the main pole portion 72. In the coil portions 101 and 102, conductor wires 90 are connected to each other on a coil inner periphery side. The coil body 100 can also be said to be a unit coil in which the two layers in the radial direction are a single unit. In addition, the inner coil portion 101 includes a coil end portion 103 that extends in the axial direction from a turnaround portion, and the outer coil portion 102 has a coil end portion 104 that extends in the axial direction from a turnaround portion. The coil body 100 is attached to the main pole portion 72 by the main pole portion 72 being inserted through a hollow portion. As described above, the coil body 100 includes the straight portion and the crossover portion. Specifically, the inner coil portion 101 includes a straight portion 101a and a crossover portion 101b, and the outer coil portion 102 includes a straight portion 102a and a crossover portion 102b.

In the field winding 80, the coil bodies 100 of the magnetic poles adjacent to each other in the circumferential direction are connected in series by the coil end portions 103 and 104 of the coil bodies 100 being joined to each other. An example of this configuration will be described with reference to Figs. 5(b) and (c). Fig. 5(b) shows two types of the coil body 100 in which shapes of the coil end portions 103 and 104 differ. Here, in the description below, one of the two types of the coil body 100 is also referred to as a "first coil body 100A," and the other as a "second coil body 100B." In addition, the coil end portions 103 and 104 of the first coil body 100A are "coil end portions 103a and 104a" and the coil end portions 103 and 104 of the second coil body 100B are "coil end portions 103b and 104b."

As shown in Fig. 5(b), in the first coil body 100A, of the respective coil end portions 103a and 104a of the inner coil portion 101 and the outer coil portion 102, the shape of the coil end portion 104a of the outer coil portion 102 differs from the coil end portion 104 shown in Fig. 5(a). Specifically, the coil end 104a of the outer coil portion 102 does not extend directly in the axial direction from an end portion position shown in Fig. 5(a), but rather extends in the circumferential direction along an upper surface of the turnaround portion of the first coil body 100A, and is bent in the axial direction at a position shifted in the circumferential direction by one magnetic pole pitch, that is, at a position substantially side-by-side with the coil end 103a of the inner coil portion 101.

Also, in the second coil body 100B, of the respective coil end portions 103b and 104b of the inner coil portion 101 and the outer coil portion 102, the shape of the coil end portion 103b of the inner coil portion 101 differs from the coil end portion 103 shown in Fig. 5(a). Specifically, the coil end 103b of the inner coil portion 101 does not extend directly in the axial direction from the end portion position shown in Fig. 5(a), but rather extends in the circumferential direction toward a side opposite the turnaround portion of the second coil body 100B, and is bent in the axial direction at a position shifted in the circumferential direction by one magnetic pole pitch.

That is, the first coil body 100A and the second coil body 100B are two types of the coil body 100 in which the shapes of the coil end portions 103 and 104 differ, while being based on one type of the coil body 100 (the coil body 100 shown in Fig. 5(a)).

Fig. 5(c) is a diagram of a state in which the coil bodies 100A and 100B arrayed in the circumferential direction are connected in series. Here, in Fig. 5(c), a state in which the coil bodies 100A and 100B are arrayed in a straight line rather than a circular arc is shown for convenience. In this case, of the inner and outer sides in the radial direction, on the inner side in the radial direction, the coil end portions 103a and 103b of the coil bodies 100A and 100B are joined to each other. On the outer side in the radial direction, the coil end portions 104a and 104b of the coil bodies 100A and 100B are joined to each other. For example, the coil end portions 103 and 104 may be joined by welding.

Here, in a state where the coil bodies 100A and 100B are arranged in a circular arc as an actual configuration, the coil bodies 100A and 100B are not arrayed on a straight line from a planar view, but rather arrayed in a mutually intersecting state. Therefore, at least either of the coil end portions 103a and 103b that are joined to each other is raised in the axial direction on a line obliquely intersecting an extending direction. As a result, the coil end portions 103 can be favorably surface-joined to each other. For example, an orientation of the surface-joining of the coil end portions 103 may be an orientation along a straight line extending from a rotational center point of the rotor 60. This similarly applies to the coil end portions 104a and 104b.

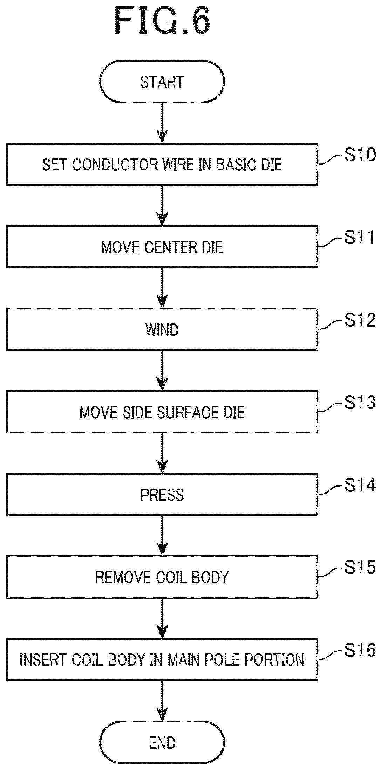

Next, a method for manufacturing the field winding 80 will be described with reference to Fig. 6. Of the first and second winding portions 81 and 82 configuring the field winding 80, the first winding portion 81 will mainly be described below.

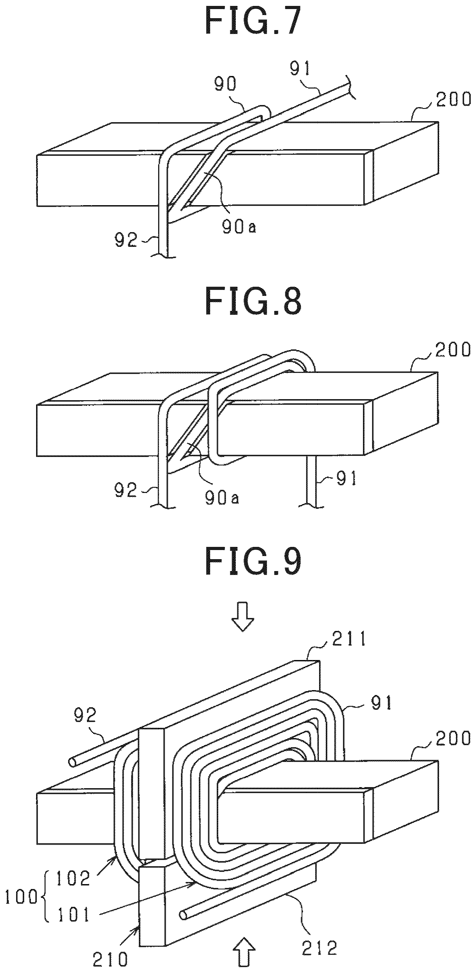

At step S10, with an intermediate portion 90a of the conductor wire 90 (specifically, a round wire) having a circular lateral cross-section as a start-of-winding portion, a first conductor portion 91 that is one end side of the conductor wire 90 relative to the start-of-winding portion is wound around a basic die 200 in a first direction. Meanwhile, a second conductor portion 92 that is another end side of the conductor wire 90 relative to the start-of-winding portion is wound around the basic die 200 in a second direction opposite the first direction (see Fig. 7 and Fig. 8). The basic die 200 configures a press apparatus and is a die forming (shaping) the main pole portion 72. Winding of the conductor portions 91 and 92 around the basic die 200 is performed by a winding apparatus.

At step S11, a center die 210 configuring the press apparatus is moved so as to be disposed between the first conductor portion 91 and the second conductor portion 92 (see Fig. 9). The center die 210 according to the present embodiment is divided into two in an vertical (up/down) direction, and composed of a first center die 211 and a second center die 212.

At step S12, in a state in which the center die 210 is disposed, the first conductor portion 91 and the second conductor portion 92 are further wound around the basic die 200 by the winding apparatus. As a result, as shown in Fig. 9, an α-wound coil body 100 is manufactured. A portion of the coil body 100 configured by the first conductor portion 91 is the inner coil portion 101 (equivalent to a "first coil portion"), and a portion of the coil body 100 configured by the second conductor portion 92 is the outer coil portion 102 (equivalent to a "second coil portion"). The inner coil portion 101 is in contact with one surface of the center die 201, and the outer coil portion 102 is in contact with another surface of the center die 210.

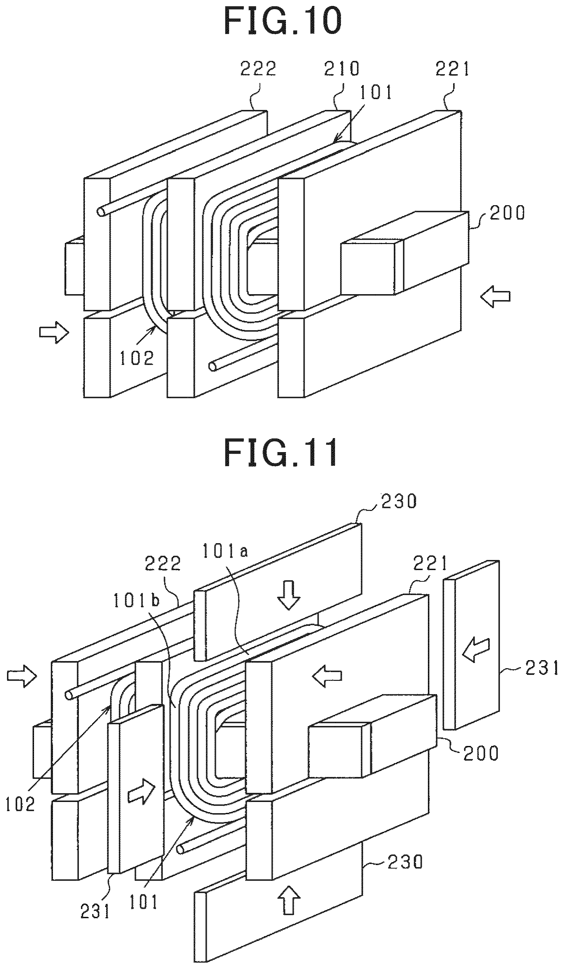

At step S13, a first side surface die 221 is moved toward the center die 210 (see Fig. 10) and thereby placed in contact with a side of the inner coil portion 101 opposite a contact portion with the center die 210 side. In addition, a second side surface die 222 is moved toward the center die 210 and thereby placed in contact with a side of the outer coil portion 102 opposite a contact portion with the center die 210 side.

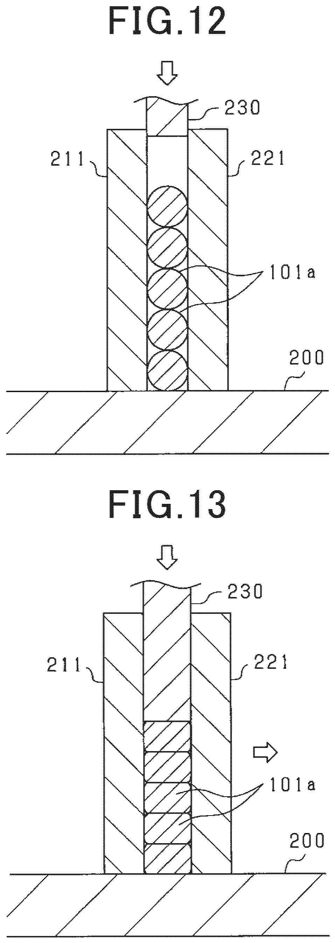

At step S14 (corresponding to a "press process"), in a state in which the inner coil portion 101 is sandwiched between the center die 210 and the first side surface die 221, as shown in Fig. 11, a main movable die 230 is pressed against the straight portion 101a configuring the inner coil portion 101 from the vertical direction toward a side of the basic die 200. The lateral cross-section of the straight portion 101a configuring the inner coil portion 101 is thereby compression-formed into a rectangular shape. Here, as shown in Fig. 12 to Fig. 14, the straight portion 101a having the circular lateral cross-section is compression-formed in stages. Because the straight portion 101a extends in a direction orthogonal to the compression direction of the straight portion 101a in accompaniment with compression-forming, movement of the first side surface die 221 may be permitted as shown in Fig. 13.

In addition, at step S14, in a state in which the outer coil portion 102 is sandwiched between the center die 210 and the second side surface die 222, the main movable die 230 is pressed against the straight portion 102a configuring the outer coil portion 102 from the vertical direction toward a side of the basic die 200. The lateral cross-section of the straight portion 102a configuring the outer coil portion 102 is thereby compression-formed into a rectangular shape in a manner similar to the inner coil portion 101. Because the straight portion 102a extends in a direction orthogonal to the compression direction of the straight portion 102a in accompaniment with compression-forming, movement of the second side surface die 222 may be permitted.

As a result of the press process by the main movable die 230, the lateral cross-sections of the straight portion 101a configuring the inner coil portion 101 and the straight portion 102a configuring the outer coil portion 102 become oblong as shown in Fig. 3. The straight portions 101a configuring the inner coil portion 101 corresponds to the straight portions 81a arrayed five in a row in the circumferential direction in the first winding portion 81 shown in Fig. 3. The straight portions 102a configuring the outer coil portion 102 corresponds to the straight portions 81a arrayed six in a row in the circumferential direction in the first winding portion 81 shown in Fig. 3.

At step S14, in a state in which the inner coil portion 101 is sandwiched between the center die 210 and the first side surface die 221, as shown in Fig. 11, an auxiliary movable die 231 is pressed against the crossover portion 101b configuring the inner coil portion 101 from a horizontal (left/right) direction toward a side of the basic die 200. The lateral cross-section of the crossover portion 101b configuring the inner coil portion 101 is thereby compression-formed into a rectangular shape. Here, in a manner similar to the straight portion 101a, the crossover portion 101b having the circular lateral cross-section is compression-formed in stages. Because the crossover portion 101b extends in a direction orthogonal to the compression direction of the crossover portion 101b in accompaniment with compression-forming, movement of the first side surface die 221 may be permitted.

In addition, at step S14, in a state in which the outer coil portion 102 is sandwiched between the center die 210 and the second side surface die 222, the auxiliary movable die 231 is pressed against the crossover portion 102b configuring the outer coil portion 102 from a horizontal direction toward a side of the basic die 200. The lateral cross-section of the crossover portion 102b configuring the outer coil portion 102 is thereby compression-formed into a rectangular shape in a manner similar to the inner coil portion 101. Because the crossover portion 102b extends in a direction orthogonal to the compression direction of the crossover portion 102b in accompaniment with compression-forming, movement of the second side surface die 222 may be permitted.

As a result of the press process by the auxiliary movable die 231, the lateral cross-sections of the crossover portion 101b configuring the inner coil portion 101 and the crossover portion 102b configuring the outer coil portion 102 become oblong.

After step S14, at step S15, the compression-formed coil body 100 is removed from the basic die 200.

The coil body 100 configuring the first winding portion 81 is manufactured by the processes at steps S10 to S15 described above. In a similar manner, the coil body 100 configuring the second winding portion 82 is manufactured by the processes at steps S10 to S15. In this case, at step S14, the inner coil portion 101 and the outer coil portion 102 are compression-formed such that the aspect ratio of the coil body 100 (corresponding to the "inner coil body") configuring the second winding portion 82 disposed on the inner side in the radial direction of the main pole portion 72 is greater than the aspect ratio of the coil body 100 (corresponding to the "outer coil body") configuring the first winding portion 81 disposed on the outer side in the radial direction of the main pole portion 72 (see Fig. 3)

At subsequent step S16, the coil body 100 configuring the first winding portion 81 and the coil body 100 configuring the second winding portion 82 are inserted into the main pole portion 72.

Here, the apparatuses required in the manufacturing processes in Fig. 6, such as the center die 210, the first side surface die 221, the second side surface die 222, the main movable die 230, and the auxiliary movable die 231 configuring a press-forming apparatus, and the winding apparatus described with reference to Fig. 6 are controlled by a controller.

According to the present embodiment described above, the lateral cross-sections of the straight portions 81a and 82a configuring the winding portions 81 and 82 have a rectangular shape in which the radial direction is the long sides. The aspect ratio of the straight portion 82a configuring the second winding portion 82 is greater than the aspect ratio of the straight portion 81a configuring the first winding portion 81. Therefore, of the straight portions arrayed in the circumferential direction and the radial direction in each main pole portion 72, a dimension in a short-side direction of the lateral cross-section of the straight portion 82a of the second winding portion 82 is smaller than the dimension in the short side direction of the lateral cross-section of the straight portion 81a of the first winding portion 81. As a result, the number of turns in the field winding 80 on the inner side in the radial direction of the main pole portion 72 can be increased while preventing interference between the straight portion 82a on the outermost layer in the circumferential direction of the second winding portion 82 wound around one of the main pole portions 72 adjacent to each other in the circumferential direction, and the straight portion 82a on the outermost layer in the circumferential direction of the second winding portion 82 wound around the other main pole portion 72. As a result, dead space between the main pole portions 72 adjacent to each other in the circumferential direction can be reduced and space factor of the field winding 80 can be improved. Consequently, the resistance value of the field winding 80 can be reduced and excitability of the field winding can be enhanced.

In addition, through the setting of the aspect ratios described above, as shown in Fig 3, the number of straight portions (five straight portions), among the straight portions 82a configuring the second winding portion 82, arrayed in the circumferential direction furthest toward the first winding portion 81 side in the radial direction can be set to the same number as the number of straight portions (five straight portions), among the straight portions 81a configuring the first winding portion 81, arrayed in the circumferential direction furthest toward the second winding portion 82 side in the radial direction. Here, number of straight portions, among the straight portions 82a configuring the second winding portion 82, arrayed in the circumferential direction furthest toward the first winding portion 81 side in the radial direction may be greater than the number of straight portions, among the straight portions 81a configuring the first winding portion 81, arrayed in the circumferential direction furthest toward the second winding portion 82 side in the radial direction.

### <Other embodiments>

Here, the above-described embodiment may be modified as below.

In the press process at step S14 in Fig. 6, the crossover portions 101b and 102b may not be compression-formed by the auxiliary movable die 231. In this case, the lateral cross-sections of the crossover portions 101b and 102b are circular.

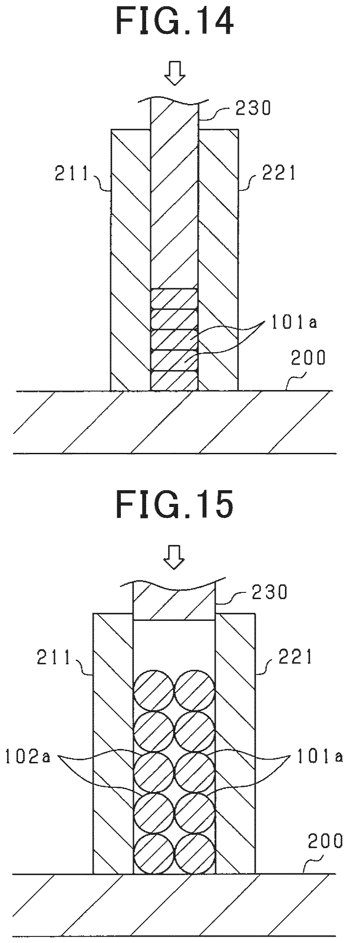

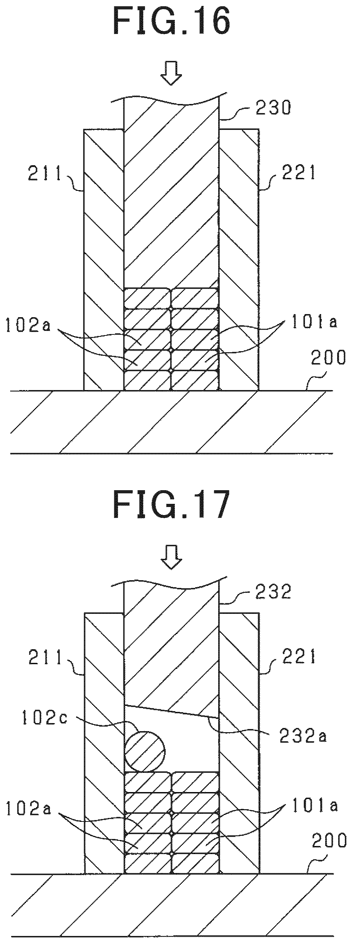

As shown in Fig. 15 and Fig. 16, the straight portion 101a of the inner coil portion 101 and the straight portion 102a of the outer coil portion 102 may be simultaneously compression-formed by the main movable die 230. Fig. 15 and Fig. 16 show an example in which five coil portions 101 and five coil portions 102 are present, for convenience. In addition, the straight portions to be simultaneously formed may be three layers or more.

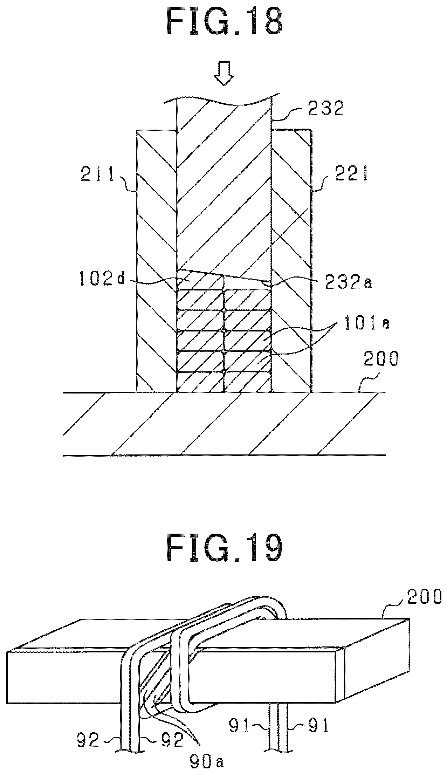

Furthermore, as shown in Fig. 17, an additional straight portion 102c may be disposed above the straight portion 102a by the second conductor portion 92 being further wound. As shown in Fig. 18, compression-forming may be performed by a movable die 232 in which a sloped surface 232a is formed. As a result, a straight portion 102d in which a sloped portion is formed is formed. The straight portion having the sloped portion is a straight portion adjacent to the second axis B2 in Fig. 3. As a result of the field winding 80 including the straight portion having the sloped portion, the distance between field windings 80 adjacent to each other in the circumferential direction can be reduced, and space factor of the field winding 80 can be further improved.

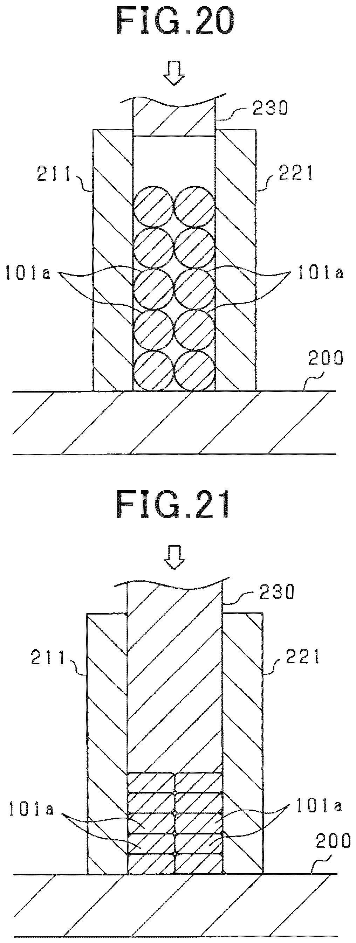

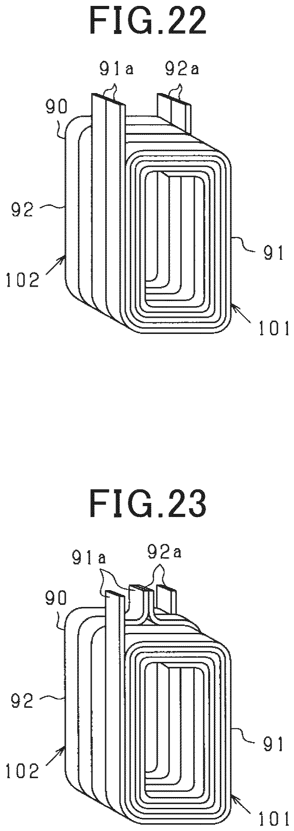

In a winding process at step S10 in Fig. 6, rather than the single conductor wire 90, two conductor wires 90 arrayed in the radial direction may be collectively wound around the basic die 200. In this case, two air-core coils configured by the first and second conductor portions 91 and 92 are manufactured. After the two air-core coils are manufactured, in the press process at step S14 in Fig. 6, a portion (inner coil portion 101) configured by the first conductor portion 91 and a portion (outer coil portion 102) configured by the second conductor portion 92 in each air-core coil are compression-formed by the main movable die 230. Fig. 20 and Fig. 21 show an example in which the straight portions 101a of the portion (inner coil portion 101) configured by the first conductor portion 91 in each air-core coil are compression formed. Fig. 22 shows a schematic diagram of the inner coil portion 101 and the outer coil portion 102 that are the two air-core coils. Subsequently, tip end portions 91a of the two first conductor portions 91 of the inner coil portion 101 are joined to each other by welding by a welding apparatus or the like, and tip end portions 92a of the two second conductor portions 92 of the outer coil portion 102 are joined to each other by welding by a welding apparatus or the like. A parallel-connection body of the two air-core coils (the inner coil portion 101 and the outer coil portion 102) configured by the first and second conductor portions 91 and 92 is thereby manufactured.

When the aspect ratio is increased, pressure on the conductor wire 90 from the main movable die 230 is required to be increased. In this case, damage to the insulation film on the surface of the conductor wire 90 becomes a concern. Therefore, as shown in Fig. 19, the two conductor wires 90 arrayed in the radial direction are used. When the aspect ratios of the two conductor wires 90 that are compression-formed are made equal to the aspect ratio of the single conductor wire 90 that is compression-formed (see Fig. 14 and the like), a compression amount of the two conductor wires 90 in a movement direction of the main movable die 230 can be smaller than a compression amount of the single conductor wire 90. As a result, the pressure required for compression-forming can be reduced. Even in cases in which a formed winding having a greater aspect ratio is required, damage to the insulating film can be reduced. In addition, as a result of aspects shown in Fig. 19 to Fig. 21, an insulating film can be interposed between the two conductor wires 90 (such as the straight portions), and an effect of reducing eddy currents can be achieved compared to when the single conductor wire 90 is used.

In addition, after the inner coil portion 101 and the outer coil portion 102 that are the two air-core coils are manufactured by the method describe above, as shown in Fig. 23, a series-connection body of the inner coil portion 101 and the outer coil portion 102 may be manufactured by the tip end portion 91a positioned on the outer coil portion 102 side, of the tip end portions 91a of the two first conductor portions 91 of the inner coil portion 101, and the tip end portion 92a positioned on the inner coil portion 101 side, of the tip end portions 92a of the two second conductor portions 92 of the outer coil portion 102, being joined by welding by a welding apparatus or the like.

Here, not only two conductor wires 90 but N conductor wires 90 (N being an integer of 2 or greater) arrayed in the radial direction may be collectively wound around the basic die 200. In this case, a parallel-connection body of N air-core coils configured by the first and second conductor portions 91 and 92 is manufactured by the tip end portions of the N first conductor portions 91 being joined to each other by welding by a welding apparatus or the like, and the tip end portions of the N second conductor portions 92 being joined to each other by welding by a welding apparatus or the like. In the case of the N conductor wires 90, a formed winding having a greater aspect ratio can be manufactured.

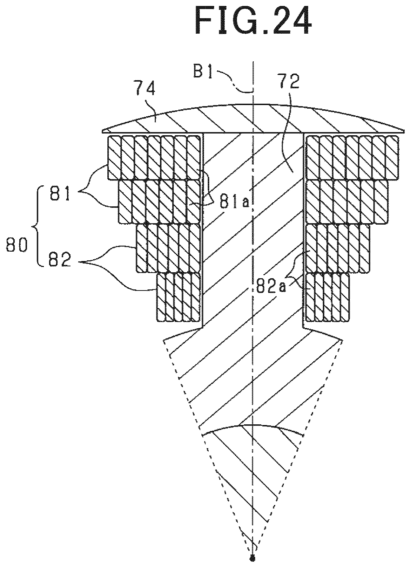

As shown in Fig. 24, press-forming by the main movable die 230 may be performed such that that the aspect ratios of the straight portions 81a differ for each layer of the first winding portion 81. In addition, press-forming by the main movable die 230 may be performed such that that the aspect ratios of the straight portions 82a differ for each layer of the second winding portion 82. In an example shown in Fig. 24, an example in which seven, six, six, and five straight portions are formed in order from the outer side in the radial direction in the winding portions 81 and 82 is shown. As a result of the α-winding configuration being used, concentrated winding in two-layer units is possible, and the aspect ratio can be changed mid-layer in the winding portions 81 and 82.

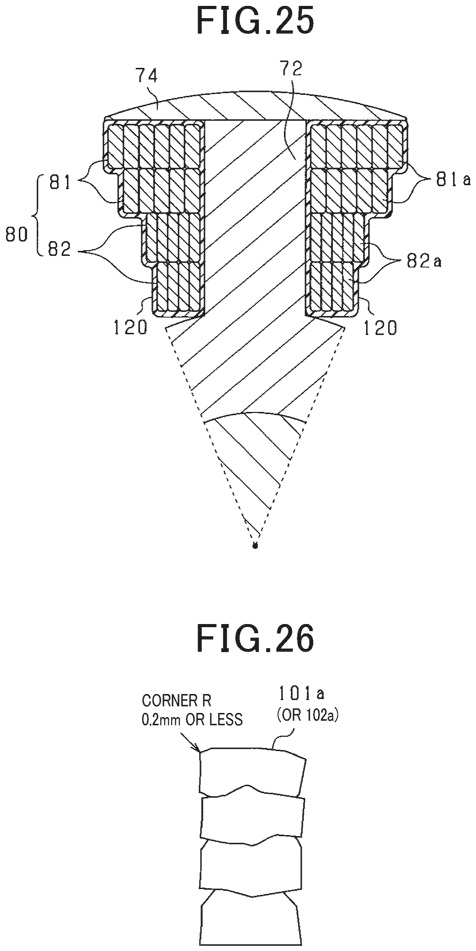

As shown in Fig. 25, a synthetic resin layer 120 that is a molding resin providing electrical insulation may be formed in at least a contact portion with the main pole portion 72 of the winding portions 81 and 82 (coil bodies). In an example shown in Fig. 25, the synthetic resin layer 129 is formed over an overall circumferential area of the winding portions 81 and 82. For example, a thickness dimension of the synthetic resin layer 120 may be equal to or smaller than the dimension of the short side of the straight portion 82a configuring the second winding portion 82. Here, for example, a process for forming the synthetic resin layer 120 may be provided between steps S15 and S16 in Fig. 6.

In general, in the case of a round wire, a contact area between the main pole portion 72 and the round wire is small, and pressure applied to the insulating layer (insulating film) of the round wire is large. In this case, a bobbin around which the field winding 80 is wound is required. In contrast, the straight portions 81a and 82a shown in Fig. 25 are flat wires, and the contact area with the main pole portion 72 is large. Therefore, the pressure applied to the insulating layer of the straight portions 81a and 82a is small, and a bobbin is not required. As a result, space factor of the field winding 80 can be improved.

The round wire is compression-formed in the press process at step S14 in Fig. 6. In this case, as shown in Fig. 26, the straight portions 101a and 102a may be that which has unevenness on contact surfaces with each other. In this case as well, as a result of compression-forming, the straight portions 101a and 102a can be placed in close contact with each other in a state in which unevenness is present on the contact surfaces with each other, and space factor of the field winding 80 can be improved. Here, in this case, height dimensions of the unevenness in the straight portions 101a and 102a may be, for example, 0.1 to 0.2 mm. In addition, a circular arc portion (corner R) of four corners of the straight portions 101a and 102a may be, for example, 0.2 mm or less.

In each main pole portion 72, three or more coil bodies configured by the conductor wire being wound in two layers in the radial direction may be provided.

The capacitor 84 configuring the resonance circuit may be connected in parallel to the first winding portion 81 rather than the second winding portion 82. In addition, the orientation of the diode 83 may be such that the cathode and anode are reversed. Specifically, the anode of the diode 83 may be connected to one end of the first winding portion 81 and the cathode of the diode 83 may be connected to one end of the second winding portion 82.

The rotating electric machine is not limited to the inner-rotor-type rotating electric machine and may be an outer-rotor-type rotating electric machine. In this case, the main pole portion protrudes from the rotor core towards the inner side in the radial direction.

The rotating electric machine is not limited to the rotating electric machine having the star connection and may be a rotating electric machine having a Δ connection.

The stator core may be a stator core that is not provided with teeth.

The configuration for sending the field current to the field winding is not limited to the circuit shown in Fig. 4 and may be, for example, a configuration including a brush electrically connected to the field winding and a power supply electrically connected to the brush. In this case, a harmonic voltage for inducing the field current is not required to be applied to the stator winding.

The rotating electric machine is not limited to the rotating electric machine used as a main onboard motor and may be, for example, a rotating electric machine used as an ISG that is both a motor and a generator.

A moving body in which the control system is mounted is not limited to a vehicle and may be, for example, an aircraft or a ship. In addition, the control system is not limited to a system mounted in a moving body and may be a stationary system.

While the present disclosure has been described with reference to embodiments thereof, it is to be understood that the disclosure is not limited to the embodiments and constructions. The present disclosure is intended to cover various modification examples and modifications within the range of equivalency. In addition, various combinations and configurations, and further, other combinations and configurations including more, less, or only a single element thereof are also within the spirit and scope of the present disclosure.

## Claims

1. A wound field rotor (60) that is applicable to a wound-field-type rotating electric machine (40), the wound field rotor comprising:
a rotor core (70) that includes a main pole portion (72) provided for each magnetic pole arrayed in a circumferential direction and protruding in a radial direction; and
a field winding (80) that is configured by a conductor wire (90) being wound in multiple layers around each main pole portion such that the conductor wire is arrayed in the radial direction and the circumferential direction, wherein:
the field winding wound around the main pole portion includes
a straight portion (81a, 82a, 101a, 102a) that extends in an axial direction along a side surface in the radial direction of the main pole portion, and
a crossover portion (101b, 102b) that connects end portions of the straight portions; and
a lateral cross-section of the straight portion has a rectangular shape in which a radial direction is a long side; and
the field winding is configured such that, of the straight portions arrayed in the circumferential direction and the radial direction in the main pole portion, a dimension in a short-side direction of the lateral cross-section of the straight portion on an inner side in the radial direction is smaller than the dimension in the short-side direction of the lateral cross-section of the straight portion on an outer side in the radial direction.

2. The wound field rotor according to claim 1, wherein:
the field winding includes a plurality of coil bodies (100) configured by the conductor wire being wound in two layers in the radial direction for each main pole portion; and
the coil body is α-wound.

3. The wound field rotor according to claim 2, wherein:
the coil body is configured such that, of the straight portions of the two layers configuring the coil body, the dimension in the short-side direction of the lateral cross-section of the straight portion (82a) on the inner side in the radial direction is shorter than the dimension in the short-side direction of the lateral cross-section of the straight portion (81a) on the outer side in the radial direction.

4. The wound field rotor according to claim 2 or 3, wherein:
a synthetic resin layer (120) that provides electrical insulation is formed in at least a contact portion with the main pole portion of the coil body.

5. The wound field rotor according to claim 2 or 3, wherein:
in a case in which the coil body (81) disposed on the outer side in the radial direction is an outer coil body and the coil body (82) disposed on the inner side in the radial direction is an inner coil body,
a number of straight portions, among the straight portions (82a) configuring the inner coil body, arrayed in the circumferential direction furthest toward the outer coil body side in the radial direction is equal to or greater than a number of straight portions, among the straight portions (81a) configuring the outer coil body, arrayed in the circumferential direction furthest toward the inner coil body side in the radial direction.

6. The wound field coil according to claim 1, wherein:
the field winding includes a plurality of coil bodies configured by the conductor wire being wound in a plurality of layers in the radial direction for each main pole portion;
the coil body is α-wound; and
the conductor wires of the plurality of layers are connected in parallel in the conductor body.

7. The wound field rotor according to claim 1, wherein:
the field winding includes a plurality of coil bodies configured by the conductor wire being wound in a plurality of layers in the radial direction for each main pole portion;
the coil body is α-wound; and
the conductor wires of the plurality of layers are connected in series in the conductor body.

8. A method for manufacturing a wound field rotor (60) applied to a wound-field-type rotating electric machine (40), wherein:
the wound field rotor includes
a rotor core (70) that includes a main pole portion (72) provided for each magnetic pole arrayed in a circumferential direction and protruding in a radial direction, and
a field winding (80) that is configured by a conductor wire (90) being wound in multiple layers around each main pole portion such that the conductor wire is arrayed in the radial direction and the circumferential direction;
the field winding wound around the main pole portion includes
a straight portion (81a, 82a, 101a, 102a) that extends in an axial direction along a side surface in the radial direction of the main pole portion, and
a crossover portion (101b, 102b) that connects end portions of the straight portions;
a lateral cross-section of the straight portion has a rectangular shape in which a radial direction is a long side;
the field winding includes a plurality of coil bodies (100) configured by the conductor wire being wound in a plurality of layers in the radial direction for each main pole portion;
the method for manufacturing the wound field rotor includes
a process for manufacturing the coil body that is α-wound by winding, with an intermediate portion (90a) of a conductor wire (90) having a circular lateral cross-section as a start-of-winding portion, a first conductor portion (91) that is one end side of the conductor wire relative to the start-of-winding portion around a basic die (200) that is a die forming the main pole portion in a first direction, and winding a second conductor portion (92) that is another end side of the conductor wire relative to the start-of-winding portion around the basic die in a second direction opposite the first direction, and
a press process for compression-forming, in a state in which a first coil portion (101) configured by the first conductor portion of the coil body and a second coil portion (102) configured by the second conductor portion of the coil body are placed in contact with a center die (210) disposed between the first coil portion and the second coil portion, the first coil portion is placed in contact with a first side surface die (221) disposed on a side opposite the center die side of the first coil portion, and the second coil portion is placed in contact with a second side surface die (222) disposed on a side opposite the center die side of the second coil portion, the lateral cross-section of the straight portion configuring the first coil portion into a rectangular shape by pressing a main movable die (230) against the straight portion (101a) configuring the first coil portion toward a side of the basic die, and compression-forming the lateral cross-section of the straight portion configuring the second coil portion into a rectangular shape by pressing the main movable die against the straight portion (102a) configuring the second coil portion toward a side of the basic die,
in the press process, the straight portions configuring the first coil portion and the second coil portion are compression-formed to form lateral cross-sections in which a direction orthogonal to a direction in which the straight portion extends and a compression direction is a long side, and
in the press process, an outer coil body (81) that is the coil body disposed on the outer side in the radial direction and an inner coil body (82) that is the coil body disposed on the inner side in the radial direction are compression-formed such that an aspect ratio of the straight portion (82a) configuring the inner coil body is greater than an aspect ratio of the straight portion (81a) configuring the outer coil body.

9. The method for manufacturing a wound field rotor according to claim 8, wherein:
in the press process, the coil body is compression-formed such that, of the straight portions of two layers configuring the coil body, a dimension in a short-side direction of a lateral cross-section of the straight portion disposed on the outer side in the radial direction and a dimension in the short-side direction of the lateral cross-section of the straight portion disposed on the inner side in the radial direction differ.

10. The method for manufacturing a wound field rotor according to claim 8 or 9, wherein:
in the press process, the lateral cross-section of the crossover portion (101b) configuring the first coil portion is compression-formed into a rectangular shape by an auxiliary movable die (231) being pressed against the crossover portion configuring the first coil portion toward a side of the basic die, and the lateral cross-section of the crossover portion (102b) configuring the second coil portion is compression-formed into a rectangular shape by the auxiliary movable die being pressed against the crossover portion configuring the second coil portion toward a side of the basic die, and
in the press process, compression-forming is performed such that an aspect ratio of the straight line portion and an aspect ratio of the crossover portion differ.

11. The method for manufacturing a wound field rotor according to claim 8 or 9, wherein:
in the coil body compression-formed in the press process, straight portions arrayed in the circumferential direction are in close contact with each other in a state in which unevenness is present in contact surfaces with each other.
